(19) Europäisches Patentamt
European Patent Office
Office européen des brevets

(11) Veröffentlichungsnummer: **0 493 759 A1**

(12) **EUROPÄISCHE PATENTANMELDUNG**

(21) Anmeldenummer: **91121926.9**

(22) Anmeldetag: **20.12.91**

(51) Int. Cl.[5]: **C09B 62/085**, C09B 62/51, D06P 1/38

(30) Priorität: **31.12.90 DE 4042290**

(43) Veröffentlichungstag der Anmeldung: **08.07.92 Patentblatt 92/28**

(84) Benannte Vertragsstaaten: **CH DE ES FR GB IT LI**

(71) Anmelder: **HOECHST AKTIENGESELLSCHAFT**
**Postfach 80 03 20**
**W-6230 Frankfurt am Main 80(DE)**

(72) Erfinder: **Reiher, Uwe, Dr.**
**Koblenzer Strasse 52**
**W-6000 Frankfurt am Main(DE)**

(54) **Wasserlösliche Azoverbindungen, Verfahren zu deren Herstellung und ihre Verwendung als Farbstoffe.**

(57) Es werden Azoverbindungen, die faserreaktive Gruppen besitzen und wertvolle Farbstoffeigenschaften haben und hydroxy- und/oder carbonamidgruppenhaltige Materialien, insbesondere Fasermaterialien, wie Cellulosefasern und natürliches und synthetisches Polyamid, wie Wolle, in farbstarken, echten Tönen zu färben vermögen, beschrieben. Sie entsprechen der allgemeinen Formel (1)

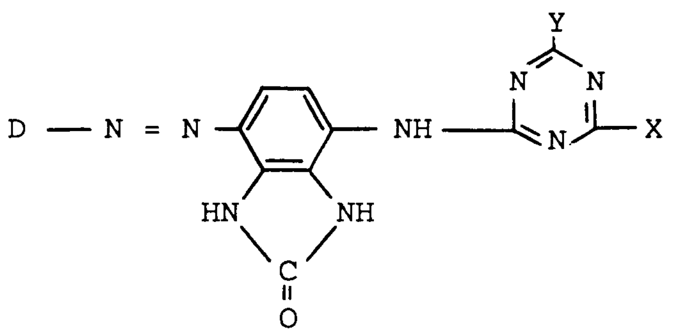

(1)

in welcher bedeuten:

D ist Phenyl oder Naphthyl, die beide substituiert sind, wobei mindestens einer der Substituenten eine wasserlöslich machende Gruppe oder ein Substituent ist, der eine wasserlöslich machende Gruppe enthält;

Y ist Fluor, Chlor oder eine Gruppe der allgemeinen Formel - A - R , in welcher A Sauerstoff oder NH und R Wasserstoff, Cycloalkyl oder Alkyl, das durch eine oder zwei Heterogruppen unterbrochen sein kann, oder Benzyl, Sulfomethyl, $\beta$-Sulfoethyl oder Cyano ist;

X ist Fluor, Chlor oder eine Gruppe der Formel -NH-B , in welcher B eine Gruppe der Formel (3a), (3b) oder (3c)

$$— alk — SO_2 — Z \quad (3a)$$

EP 0 493 759 A1

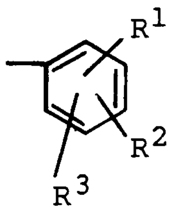

(3b)

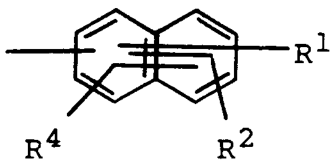

(3c)

ist, in welchen alk Alkylen ist, das durch 1 oder 2 Heterogruppen unterbrochen sein kann, Z Vinyl ist oder Ethyl ist, das in $\beta$-Stellung durch einen Substituenten substituiert ist, der durch Alkali unter Bildung der Vinylgruppe eliminierbar ist, $R^1$ Wasserstoff, Carboxy, Sulfo oder eine Gruppe der Formel $-SO_2-Z$ mit Z der obengenannten Bedeutung ist, $R^2$ Wasserstoff, Alkyl von 1 bis 4 C-Atomen, Alkoxy von 1 bis 4 C-Atomen, Chlor, Brom, Carboxy, Sulfo oder Nitro ist, $R^3$ Wasserstoff, Alkyl von 1 bis 4 C-Atomen, Alkoxy von 1 bis 4 C-Atomen, Chlor oder Brom ist und $R^4$ Wasserstoff, Sulfo oder Carboxy ist.

Die Erfindung liegt auf dem technischen Gebiet der faserreaktiven Azofarbstoffe.

Mit der vorliegenden Erfindung wurden neue, wasserlösliche Azoverbindungen gefunden, die der allgemeinen Formel (1)

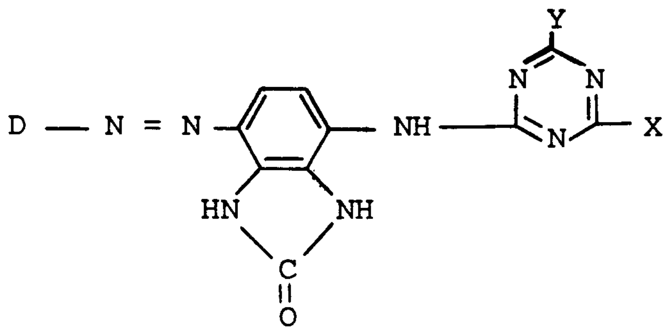

(1)

entsprechen, in welcher bedeuten:

D ist Phenyl oder Naphthyl, die beide substituiert sind, beispielsweise durch 1, 2 oder 3 Substituenten aus der Gruppe Chlor, Brom, Fluor, Sulfo, Carboxy, Alkyl von 1 bis 4 C-Atomen, wie Ethyl und insbesondere Methyl, Alkoxy von 1 bis 4 C-Atomen, wie Ethoxy und insbesondere Methoxy, Trifluormethyl, Nitro, Styryl, Nitrostyryl, Nitro-sulfo-styryl, Benzothiazol-2-yl, Methyl-benzothiazol-2-yl, Methoxy-benzothiazol-2-yl, Sulfo-benzothiazol-2-yl, Methyl-sulfo-benzothiazol-2-yl, Sulfamoyl, Carbamoyl und Alkylsulfonyl von 1 bis 4 C-Atomen, wie Methylsulfonyl und Ethylsulfonyl, wobei mindestens einer dieser Substituenten eine wasserlöslich machende Gruppe, beispielsweise eine Sulfo- oder Carboxygruppe, oder ein Substituent ist, der eine wasserlöslich machende Gruppe enthält;

Y ist Fluor, Chlor oder eine Gruppe der allgemeinen Formel (2)

$$— A — R \qquad (2)$$

in welcher

A Sauerstoff oder die Gruppe NH ist, bevorzugt NH ist, und

R Wasserstoff, Alkyl von 1 bis 10 C-Atomen, bevorzugt von 1 bis 4 C-Atomen, wie Ethyl und Methyl, oder Cycloalkyl mit 5 bis 8 C-Atomen, wie Cyclohexyl, ist oder Alkyl von 2 bis 8 C-Atomen ist, das durch eine oder zwei Heterogruppen, wie beispielsweise Gruppen der Formeln -O- , -NH- , -N-($CH_3$)- , -$SO_2$- oder -CO- , unterbrochen ist, oder Benzyl, Sulfomethyl, $\beta$-Sulfoethyl oder Cyano ist, bevorzugt Cyano ist;

X ist Fluor, Chlor oder eine Aminogruppe entsprechend der allgemeinen Formel -NH-B , in welcher

B eine Gruppe der allgemeinen Formel (3a), (3b) oder (3c)

$$— alk — SO_2 — Z \qquad (3a)$$

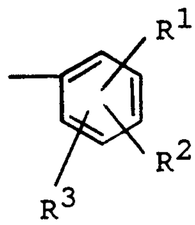

(3b)

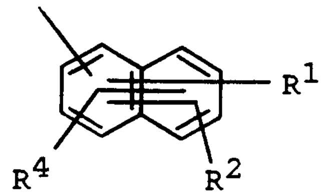

(3c)

ist, in welchen

alk verzweigtes oder vorzugsweise geradkettiges Alkylen von 1 bis 4 C-Atomen ist, vorzugsweise hiervon n-Ethylen und insbesondere n-Propylen, oder Alkylen von 2 bis 8 C-Atomen ist, das durch 1 oder 2 Heterogruppen, wie beispielsweise Gruppen der Formeln -O-, -NH-, $-N(CH_3)-$ und $-SO_2-$ , unterbrochen sein kann, wie beispielsweise eine Gruppe der Formel $-(CH_2)_2-O-(CH_2)_2-$ , ist,

Z Vinyl ist oder Ethyl ist, das in β-Stellung durch einen Substituenten substituiert ist, der durch Alkali unter Bildung der Vinylgruppe eliminierbar ist,

$R^1$ Wasserstoff, Carboxy, Sulfo oder eine Gruppe der allgemeinen Formel $-SO_2-Z$ mit Z einer der obengenannten Bedeutungen ist,

$R^2$ Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Chlor, Brom, Carboxy, Sulfo oder Nitro ist, bevorzugt Wasserstoff, Alkyl von 1 bis 4 C-Atomen, Alkoxy von 1 bis 4 C-Atomen oder Sulfo und insbesondere bevorzugt Wasserstoff oder Sulfo ist,

$R^3$ Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Chlor oder Brom ist, bevorzugt Alkoxy von 1 bis 4 C-Atomen und insbesondere Wasserstoff ist,

$R^4$ Wasserstoff, Sulfo oder Carboxy ist, bevorzugt hiervon Sulfo ist oder bevorzugt Wasserstoff ist, falls $R^1$ eine Gruppe der Formel $-SO_2-Z$ ist.

Bevorzugt ist D 2,2'-Disulfo-4'-nitro-stilben-4-yl oder 4-Chlor-3-methyl-6-sulfo-phenyl und insbesondere bevorzugt Monosulfophenyl oder Disulfophenyl, wie beispielsweise 2,4- und 2,5-Disulfophenyl, oder bevorzugt Naphthyl, hiervon bevorzugt Naphth-2-yl, das durch 1, 2 oder 3 Sulfogruppen substituiert ist, wie beispielsweise 4,8-Disulfo-naphth-2-yl und 3,6,8-Trisulfonaphth-2-yl.

Bevorzugt ist Y Fluor und insbesondere Chlor oder Cyanamido.

Bevorzugt ist X Chlor oder eine Gruppe der allgemeinen Formel -NH-B mit B gleich einem Rest der allgemeinen Formel (3a) oder (3b).

Substituenten, die in β-Stellung der Ethylgruppe des Formelrestes Z gebunden sind und alkalisch eliminierbar sind, sind beispielsweise Halogen, wie Brom und Chlor, Estergruppen organischer Carbon- und Sulfonsäuren, wie bspw. Alkanoyloxy von 2 bis 5 C-Atomen, wie Acetyloxy, oder Sulfobenzoyloxy, Benzoyloxy, Phenylsulfonyloxy oder Toluylsulfonyloxy, oder Estergruppen anorganischer, mehrwertiger Säuren, wie beispielsweise die sauren Estergruppen der Phosphorsäure, der Schwefelsäure und der Thioschwefelsäure (Phosphato- bzw. Sulfato- bzw. Thiosulfatogruppen) und Dialkylamino mit Alkyl von jeweils 1 bis 4 C-Atomen, wie Dimethylamino und Diethylamino. Bevorzugt ist der Rest $-SO_2-Z$ Vinyl und insbesondere β-Sulfatoethyl.

Die vorstehend oder nachfolgend bezeichneten Gruppen "Sulfo", "Carboxy", "Thiosulfato", "Phosphato" und "Sulfato" schließen sowohl deren Säureform als auch deren Salzform ein. Demgemäß bedeuten Sulfogruppen Gruppen entsprechend der allgemeinen Formel $-SO_3M$ , Carboxygruppen Gruppen entsprechend der allgemeinen Formel -COOM , Thiosulfatogruppen Gruppen entsprechend der allgemeinen Formel $-S-SO_3M$ , Phosphatogruppen Gruppen entsprechend der allgemeinen Formel $-OPO_3M_2$ und Sulfatogruppen entsprechend Gruppen der allgemeinen Formel $-OSO_3M$ , jeweils mit M der obengenannten Bedeutung.

Die vorliegende Erfindung betrifft weiterhin Verfahren zur Herstellung der erfindungsgemäßen Azoverbindungen der allgemeinen Formel (1), die dadurch gekennzeichnet sind, daß man ein Amin der allgemeinen Formel (4)

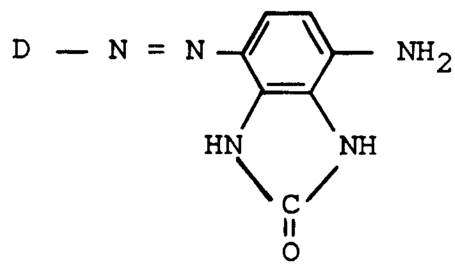

(4)

in welcher D die obengenannte Bedeutung besitzt, mit einer Verbindung der allgemeinen Formel Hal-W , in welcher Hal Chlor oder Fluor ist und W ein Rest der allgemeinen Formel (5)

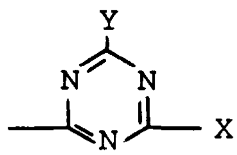

(5)

mit X und Y der obengenannten Bedeutungen ist, umsetzt, wobei im Falle, daß in Formel Hal-W sowohl Hal, X und Y gleichzeitig Halogen sind, diese jeweils gleichzeitig Chlor oder gleichzeitig Fluor sind,
oder daß man eine Verbindung der allgemeinen Formel (6)

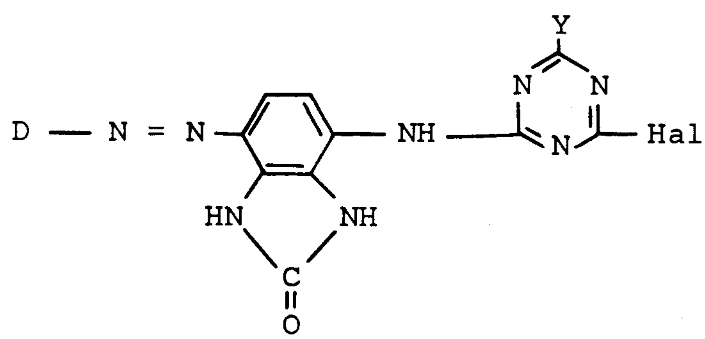

(6)

in welcher D, Y und Hal eine der obengenannten Bedeutungen besitzen, wobei im Falle, daß Y und Hal beide Halogen bedeuten, beide bevorzugt gleichzeitig Chlor oder Fluor sind, mit einer Verbindung der allgemeinen Formel $H_2N$-B mit B der obengenannten Bedeutung umsetzt.

Die erfindungsgemäßen Kondensationsreaktionen zwischen einer Amino-Azoverbindung der allgemeinen Formel (4) und einer Verbindung der allgemeinen Formel Hal-W erfolgen in üblicher Weise der Umsetzung einer Aminoverbindung mit einer ein reaktives Halogenatom enthaltenden Triazinverbindung, so in organischem oder bevorzugt wäßrigorganischem oder wäßrigem Medium unter Zusatz eines säurebindenden Mittels, wie eines Alkali- oder Erdalkalicarbonats oder -hydrogencarbonats oder einem Alkali- oder Erdalkalihydroxids oder einem Alkaliacetats, wobei die Alkali- und Erdalkalimetalle vorzugsweise Natrium, Kalium und Calcium sind, oder eines tertiären Amins, wie beispielsweise Pyridin, Triethylamin und Chinolin. Sofern die Kondensationsreaktionen in organischem oder wäßrig-organischem Medium erfolgen, ist das (anteilige) organische Lösemittel ein mit Wasser mischbares, gegenüber reaktivem Halogen inertes Lösemittel, wie beispielsweise Aceton, Dioxan oder Dimethylformamid.

Diese Kondensationsreaktionen erfolgen in der Regel bei einer Temperatur zwischen 0 und 100 °C und einem pH-Wert zwischen 1 und 8. Bevorzugt erfolgt die Umsetzung der Aminoverbindung der allgemeinen Formel (4) mit Cyanurchlorid bei einem pH-Wert zwischen 3 und 6, insbesondere zwischen 4 und 5, und bei einer Temperatur zwischen 0 und 30 °C, insbesondere zwischen 15 und 20 °C. Bevorzugt erfolgt die Umsetzung des Amins (4) mit Cyanurfluorid bei einem pH-Wert zwischen 3 und 8, insbesondere zwischen 6 und 8, und bei einer Temperatur zwischen 0 und 30 °C, insbesondere zwischen 0 und 10 °C. Bevorzugt erfolgt die Umsetzung des Amins (4) mit einer Verbindung der allgemeinen Formel Hal-W , in welcher Hal

gleich Chlor ist und im Rest W X gleich Chlor und Y gleich eine Gruppe der Formel -A-R ist, bei einem pH-Wert zwischen 1 und 8, insbesondere zwischen 6 und 8, und bei einer Temperatur zwischen 0 und 75 ° C, insbesondere zwischen 60 und 70 ° C.

Erfindungsgemäße Kondensationsreaktionen zwischen einer Halogenotriazinylamino-Azoverbindung der allgemeinen Formel (6) und einer Verbindung der allgemeinen Formel $H_2N$-B mit B der obengenannten Bedeutung erfolgen ebenfalls analog bekannten Verfahrensweisen solcher Umsetzungen zwischen Halogentriazin-Verbindungen und hydroxy- oder aminogruppenhaltigen Verbindungen bei einem pH-Wert zwischen 1 und 6, bevorzugt zwischen 3 und 5, und bei einer Temperatur zwischen 50 und 100 ° C, bevorzugt zwischen 50 und 80 ° C, unter den üblichen, oben für die Umsetzung eines Amins (4) mit einer Verbindung Hal-W angegebenen Bedingungen. Bevorzugt erfolgt hierbei die Umsetzung einer Verbindung der allgemeinen Formel (6), in welcher Hal die obengenannte Bedeutung besitzt und bevorzugt Chlor ist und Y eine Gruppe der Formel -A-R ist, mit einer Verbindung der Formel $H_2N$-B bei einem pH-Wert zwischen 1 und 6, insbesondere zwischen 3 und 5, und bei einer Temperatur zwischen 50 und 100 ° C, insbesondere zwischen 50 und 80 ° C.

Erfindungsgemäße Monoazoverbindungen der allgemeinen Formel (1), in welcher D die obengenannte Bedeutung besitzt, Y Chlor und X eine Gruppe der Formel -NH-B ist oder in welcher X Chlor und Y eine Gruppe der Formel -A-R ist, können analog den obigen Angaben für die Umsetzung eines Amins (4) mit einer Verbindung Hal-W erfindungsgemäß auch in der Weise hergestellt werden, daß man eine Verbindung der allgemeinen Formel (7)

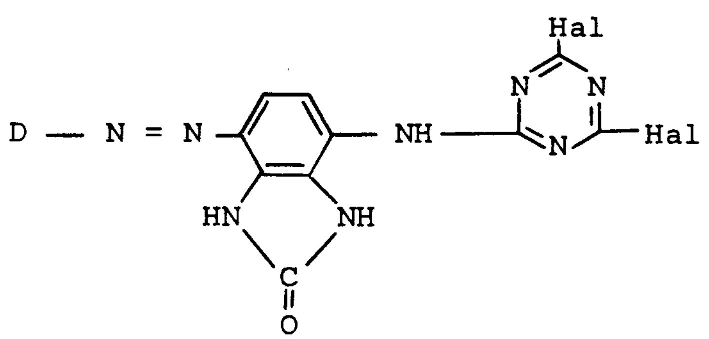

(7)

in welcher D die obengenannte Bedeutung besitzt und beide Hal Chlor bedeuten, mit einer Verbindung der allgemeinen Formel $H_2N$-B mit B der obengenannten Bedeutung bzw. mit einer Verbindung der allgemeinen Formel H-A-R mit A und R der obengenannten Bedeutung bei einem pH-Wert zwischen 1 und 10, bevorzugt zwischen 3 und 9, und bei einer Temperatur zwischen 20 und 100 ° C, bevorzugt zwischen 35 und 100 ° C, umsetzt. Bevorzugt erfolgt hierbei die Umsetzung mit einer Verbindung der allgemeinen Formel $H_2N$-B bei einer Temperatur zwischen 60 und 95 ° C, insbesondere zwischen 70 und 90 ° C, und bei einem pH-Wert zwischen 3 und 7, insbesondere zwischen 3 und 5, und bevorzugt erfolgt die Umsetzung mit einer Verbindung der allgemeinen Formel H-A-R bei einer Temperatur zwischen 20 und 50 ° C, insbesondere zwischen 35 und 45 ° C, und bei einem pH-Wert zwischen 7 und 10, bevorzugt zwischen 8 und 9. Insbesondere erfolgt die Umsetzung mit Cyanamid oder einem Alkalimetallsalz davon (A gleich die Gruppe NH und R gleich Cyano) bei einer Temperatur zwischen 35 und 45 ° C und bei einem pH-Wert zwischen 8 und 9.

Erfindungsgemäße Monoazoverbindungen der allgemeinen Formel (1), in welcher D die obengenannte Bedeutung besitzt, Y Fluor und X eine Gruppe der Formel -NH-B ist oder in welcher X Fluor und Y eine Gruppe der Formel -A-R ist, können ebenso auch durch Umsetzung einer Verbindung der allgemeinen Formel (7), in welcher D die obengenannte Bedeutung besitzt und beide Hal Fluor bedeuten, mit einer Verbindung der allgemeinen Formel $H_2N$-B mit B der obengenannten Bedeutung bzw. mit einer Verbindung der allgemeinen Formel H-A-R mit A und R der obengenannten Bedeutung bei einem pH-Wert zwischen 1 und 10, bevorzugt zwischen 7 und 9, und bei einer Temperatur zwischen 0 und 40 ° C, bevorzugt zwischen 5 und 30 ° C, hergestellt werden. Bevorzugt erfolgt hierbei die Umsetzung mit einer Verbindung der allgemeinen Formel $H_2N$-B bei einer Temperatur zwischen 0 und 30 ° C, insbesondere zwischen 5 und 20 ° C, und bei einem pH-Wert zwischen 5 und 10, insbesondere zwischen 7 und 9, und bevorzugt erfolgt die Umsetzung mit einer Verbindung der allgemeinen Formel H-A-R bei einer Temperatur zwischen 0 und 40 ° C, insbesondere zwischen 20 und 30 ° C, und bei einem pH-Wert zwischen 6 und 9, bevorzugt zwischen 7,5 und 8,5. Insbesondere erfolgt die Umsetzung mit Cyanamid oder einem Alkalimetallsalz davon (A gleich die Gruppe NH und R gleich Cyano) bei einer Temperatur zwischen 20 und 30 ° C und bei einem pH-Wert

zwischen 7,5 und 8,5.

Die Ausgangs-Aminoazoverbindungen der allgemeinen Formel (4) lassen sich in üblicher Weise durch Kupplungsreaktion der Diazoniumverbindung des Amins der Formel D-$NH_2$ mit 4-Amino-benzimidazol-2-on herstellen. Die Diazotierungs- und Kupplungsreaktionen erfolgen analog bekannten Verfahrensweisen, so die Diazotierung in der Regel bei einer Temperatur zwischen -5°C und +15°C und bei einem pH-Wert unterhalb von 2 mittels einer starken Säure und Alkalinitrit in bevorzugt wäßrigem Medium und die Kupplungsreaktion in der Regel bei einer Temperatur zwischen 0 und 30°C und bei einem pH-Wert zwischen 1,5 und 4,5, bevorzugt in wäßrigem Medium.

Die Abscheidung und Isolierung der erfindungsgemäß hergestellten Azoverbindungen der allgemeinen Formel (1) aus den Syntheselösungen kann nach allgemein bekannten Methoden erfolgen, so beispielsweise durch Ausfällen aus dem Reaktionsmedium mittels eines Elektrolyten, wie beispielsweise Natriumchlorid oder Kaliumchlorid, oder durch Eindampfen der Reaktionslösung, beispielsweise durch Sprühtrocknung, wobei der Syntheselösung eine Puffersubstanz zugefügt werden kann. Falls die letztgenannte Art der Isolierung gewählt wird, empfiehlt es sich vielfach, vor dem Eindampfen eventuell in den Lösungen vorhandene Sulfatmengen durch Fällung als Calciumsulfat und Abtrennung durch Filtration zu entfernen.

Die erfindungsgemäßen Monoazoverbindungen der allgemeinen Formel (1) - im nachfolgenden Verbindungen (1) genannt - haben faserreaktive Eigenschaften und besitzen sehr wertvolle Farbstoffeigenschaften. Sie können deshalb zum Färben (einschließlich Bedrucken) von hydroxygruppenhaltigen und/oder carbonamidgruppenhaltigen Fasermaterialien verwendet werden. Auch können die bei der Synthese der Verbindungen (1) anfallenden Lösungen, gegebenenfalls nach Zusatz einer Puffersubstanz und gegebenenfalls auch nach Konzentrierung, direkt als Flüssigpräparation der färberischen Verwendung zugeführt werden.

Gegenstand der vorliegenden Erfindung ist deshalb auch die Verwendung der erfindungsgemäßen Verbindungen (1) zum Färben (einschließlich Bedrucken) von hydroxy- und/oder carbonamidgruppenhaltigen Fasermaterialien bzw. Verfahren zu deren Anwendung auf diesen Substraten. Hierbei kann man analog bekannten Verfahrensweisen vorgehen.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane in Form von Fasern, beispielsweise Wolle und andere Tierhaare, Seide, Leder, Polyamid-6,6, Polyamid-6, Polyamid-11 und Polyamid-4.

Die Verbindungen (1) lassen sich, gemäß der erfindungsgemäßen Anwendung, auf den genannten Substraten nach den für wasserlösliche Farbstoffe, insbesondere faserreaktive Farbstoffe, bekannten Anwendungstechniken applizieren und fixieren, so beispielsweise, indem man die Verbindung (1) in gelöster Form auf das Substrat aufbringt oder sie darin einbringt und sie auf diesem oder in diesem durch Hitzeeinwirkung und/oder durch Einwirkung eines alkalisch wirkenden Mittels oder durch beide Maßnahmen fixiert. Solche Färbe- und Fixierweisen sind sowohl in der Fachliteratur als auch in der Patentliteratur zahlreich beschrieben, wie beispielsweise in der Europäischen Patentanmeldungs-Veröffentlichung Nr. 0 181 585A.

Die mit den Verbindungen (1) erfindungsgemäß erhältlichen Färbungen besitzen, insbesondere die auf Cellulosefasermaterialien, gute Lichtechtheiten sowohl im trockenen Zustand der Färbung als auch im nassen, beispielsweise mit einer Schweißlösung befeuchteten, Zustand sowie gute Naßechtheiten, wie beispielsweise Waschechtheiten bei 60 bis 95°C, auch in Gegenwart von Perboraten, gute saure und alkalische Walk-, Überfärbe- und Schweißechtheiten, eine hohe Dampfbeständigkeit, gute Alkali-, Säure-, Wasser- und Seewasserechtheiten, desweiteren eine gute Plissierechtheit, Bügelechtheit und Reibechtheit. Ebenso besitzen die Färbungen eine gute Säurelagerbeständigkeit beim Lagern des feuchten, noch Essigsäure enthaltenden, gefärbten Materials.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, wie Natrium- oder Kaliumsalze, in die Synthese eingesetzt werden.

Die im sichtbaren Bereich angegebenen Absorptionsmaxima ($\lambda_{max}$-Werte) wurden aus wäßriger Lösung der

Alkalimetallsalze bestimmt. In den Tabellenbeispielen sind die $\lambda_{max}$-Werte bei der Farbtonangabe in Klammern gesetzt; die Wellenlängenangabe bezieht sich auf nm.

Beispiel 1

Man diazotiert in üblicher Weise bei 0°C 2-Amino-naphthalin-4,8-disulfonsäure durch Zugabe von 33 Teilen einer 10N-wäßrigen Salzsäurelösung zu einem Gemisch, bestehend aus einer Lösung von 30,3 Teilen dieser Aminonaphthalinverbindung in 450 Teilen Wasser und 20 Teilen einer 5N-wäßrigen Natriumnitritlösung. Überschüssige salpetrige Säure wird in üblicher Weise mit wenig Amidosulfonsäure zerstört. Man setzt anschließend 14,9 Teile 4-Amino-benzimidazol-2-on hinzu und führt die Kupplungsreaktion bei einem pH-Wert von 4 bis 5 durch. Nach beendeter Kupplungsreaktion wird der gebildete Niederschlag abgesaugt und in 300 Teilen Wasser suspendiert. Zu dieser Suspension gibt man eine Suspension von 19 Teilen Trichlor-s-triazin in 100 Teilen Wasser und führt die Umsetzung bei 5 bis 15°C und einem pH-Wert zwischen 6 und 7 zu Ende. Anschließend gibt man 4,2 Teile Cyanamid hinzu und führt die zweite Kondensationsreaktion bei einem pH-Wert zwischen 8 und 9,5 und bei einer Temperatur zwischen 35 und 45°C durch. Die dritte Kondensationsreaktion erfolgt nach Zugabe von 24,9 Teilen 3-(β-Sulfatoethylsulfonyl)-anilin bei einem pH-Wert zwischen 3,5 und 4,5 und bei einer Temperatur zwischen 70 und 90°C.

Die erhaltene erfindungsgemäße Azoverbindung wird aus der Syntheselösung durch Zugabe von Kaliumchlorid als Alkalimetallsalz (vorzugsweise Kaliumsalz) abgeschieden und isoliert. Sie besitzt, in Form der freien Säure geschrieben, die Formel

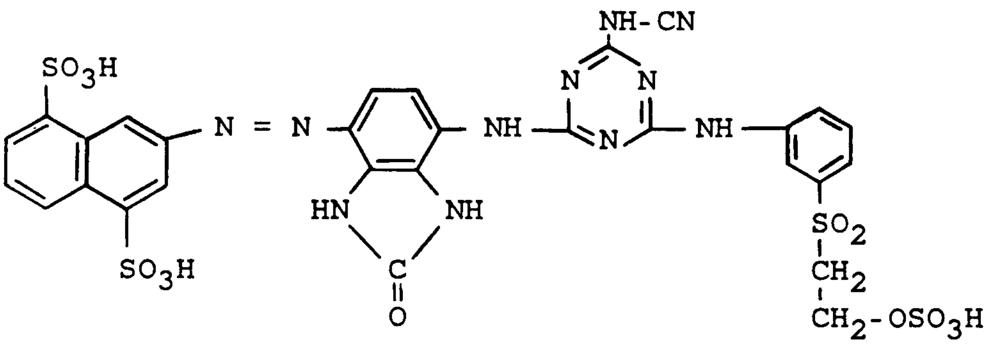

($\lambda_{max}$ = 377 nm)

und zeigt sehr gute faserreaktive Farbstoffeigenschaften. Bei Anwendung der für faserreaktive Farbstoffe bekannten Applikations- und Fixierverfahren erhält man mit der erfindungsgemäßen Azoverbindung auf den in der Beschreibung genannten Materialien, wie insbesondere Cellulosefasermaterialien, beispielsweise Baumwolle, farbstarke gelbe Färbungen und Drucke mit guten Echtheitseigenschaften, von denen insbesondere die guten Licht- und Schweißechtheiten hervorgehoben werden können.

Beispiel 2

38,3 Teile 2-Amino-naphthalin-3,6,8-trisulfonsäure werden in üblicher Weise in neutraler wäßriger Lösung (400 Teile Wasser) nach Zugabe von 20 Teilen einer wäßrigen 5N-Natriumnitritlösung und 33 Teilen einer wäßrigen 10N-Salzsäurelösung während einer Stunde bei 0°C diazotiert. Anschließend gibt man 14,9 Teile 4-Amino-benzimidazol-2-on hinzu, stellt mit einer 20 %igen wäßrigen Natriumcarbonat-Lösung allmählich einen pH-Wert zwischen 6 und 7 ein, rührt den Ansatz noch eine Stunde weiter, stellt sodann einen pH-Wert zwischen 2 und 3 mittels einer verdünnten wäßrigen Salzsäurelösung ein und isoliert die hergestellte Azoverbindung durch Aussalzen mit Kaliumchlorid und Filtration. Das isolierte Produkt wird in 700 Teilen Wasser gelöst. Mit einer 20 %igen wäßrigen Natriumcarbonat-Lösung wird ein pH-Wert zwischen 3 und 5 eingestellt, und nach Zugabe von 40 Teilen 2-Chlor-4-cyanamido-6-[4'-(β-sulfatoethylsulfonyl)-phenylamino]-1,3,5-triazin erfolgt die Kondensationsreaktion bei einer Temperatur zwischen 60 und 80°C und einem pH-Wert zwischen 3 und 5. Der Ansatz wird nach Beendigung der Umsetzung auf 20°C abgekühlt, der pH-Wert auf 4 bis 6 eingestellt und die erfindungsgemäße Azoverbindung mit Kaliumchlorid als Alkalimetallsalz (vorwiegend Kaliumsalz) ausgefällt und isoliert. Sie besitzt, in Form der freien Säure geschrieben, die Formel

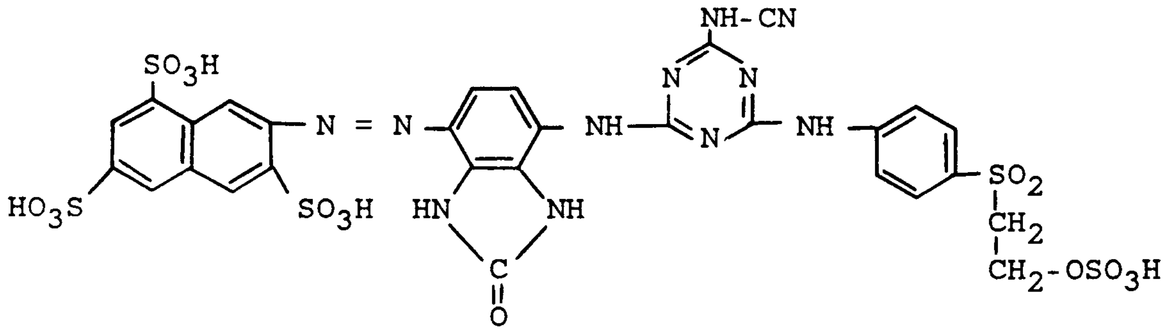

($\lambda_{max}$ = 392 nm)

zeigt sehr gute faserreaktive Farbstoffeigenschaften und liefert nach den für faserreaktive Farbstoffe üblichen Applikations- und Fixiermethoden auf den in der Beschreibung genannten Materialien, insbesondere auf Baumwolle, farbstarke, brillante, goldgelbe Färbungen und Drucke mit sehr guten Echtheitseigenschaften.

Beispiel 3

Zur Herstellung einer erfindungsgemäßen Azoverbindung stellt man zunächst die Azoverbindung aus 2-Amino-naphthalin-3,6,8-trisulfonsäure als Diazokomponente und 4-Aminobenzimidazol-2-on als Kupplungskomponente gemäß den Angaben des Beispieles 2 her. Das isolierte Produkt wird in 700 Teilen Wasser gelöst. Mit einer 20 %igen wäßrigen Natriumcarbonatlösung wird ein pH-Wert zwischen 6 und 7 eingestellt. Nach Zugabe von 19 Teilen 2,4-Dichlor-6-cyanamido-1,3,5-triazin erfolgt die Kondensationsreaktion bei einer Temperatur zwischen 50 und 70 °C und einem pH-Wert zwischen 6 und 7. Nach beendeter Umsetzung führt man die zweite Kondensationsreaktion mit 24,9 Teilen 3-($\beta$-Sulfatoethylsulfonyl)-anilin bei einem pH-Wert zwischen 3,5 und 4,5 und bei einer Temperatur zwischen 70 und 90 °C durch und isoliert die erfindungsgemäße Azoverbindung durch Aussalzen mit Kaliumchlorid als Alkalimetallsalz (Kaliumsalz).

Die erfindungsgemäße Azoverbindung besitzt, in Form der freien Säure geschrieben, die Formel

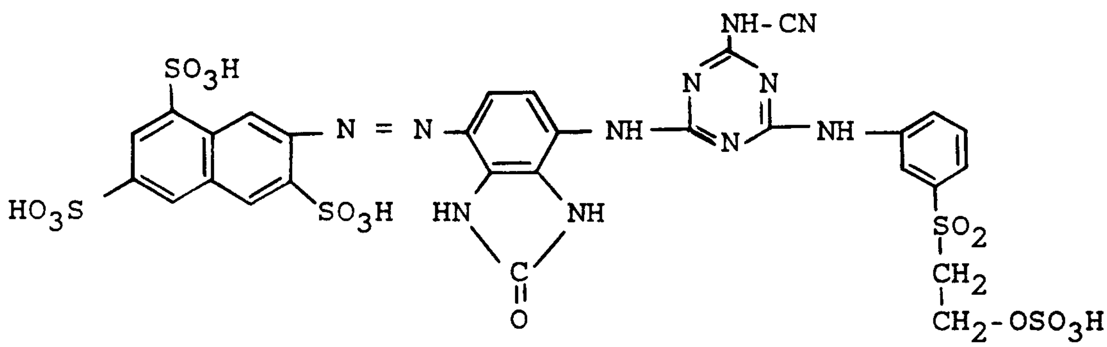

($\lambda_{max}$ = 390 nm)

hat sehr gute faserreaktive Farbstoffeigenschaften und gibt nach den für faserreaktive Farbstoffe üblichen Anwendungsmethoden auf den in der Beschreibung genannten Materialien, wie insbesondere Baumwolle, farbstarke gelbe Färbungen und Drucke mit guten Echtheitseigenschaften, von denen insbesondere die guten Licht- und Schweißlichtechtheiten hervorgehoben werden können.

Beispiel 4

Gemäß den Angaben des Beispiels 2 wird zunächst die dort hergestellte Amino-Azoverbindung in 700 Teilen Wasser gelöst. Nach Einstellung eines pH-Wertes zwischen 6 und 8 mittels verdünnter wäßriger Natronlauge gibt man bei 0 bis 10 °C 18 Teile Trifluortriazin hinzu und rührt den Ansatz noch etwa 20 Minuten bei dieser Temperatur und einem pH-Wert von 6 bis 8 nach.

Sodann gibt man 27 Teile $\gamma$-($\beta$'-Sulfatoethylsulfonyl)-propylamin hinzu, erwärmt den Ansatz langsam unter

Einhaltung eines pH-Wertes zwischen 6 und 8 auf 20 ° C, rührt den Ansatz noch 5 bis 10 Stunden nach und isoliert die erfindungsgemäße Azoverbindung durch Eindampfen der Reaktionslösung.

Man erhält die erfindungsgemäße Azoverbindung der Formel (in Form der freien Säure geschrieben)

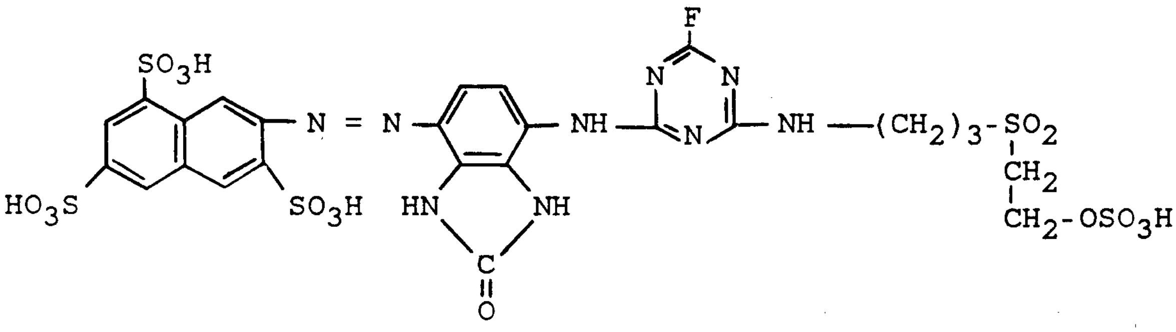

($\lambda_{max}$ = 394 nm)

als Natriumsalz, die die in der Beschreibung genannten Materialien, insbesondere Baumwolle, in farbstarken, brillanten goldgelben Tönen mit sehr guten Echtheitseigenschaften färbt.

Beispiel 5

Man diazotiert analog den Angaben des Beispieles 1 30,3 Teile 2-Amino-naphthalin-4,8-disulfonsäure und führt nach Zugabe von 14,9 Teilen 4-Amino-benzimidazol-2-on die Kupplungsreaktion im schwach sauren Bereich durch. Der gebildete Niederschlag wird abgesaugt und in 300 Teilen Wasser suspendiert. Man gibt bei 5 bis 15 ° C 19 Teile wäßrig dispergierten Trichlortriazins hinzu und führt die Kondensationsreaktion bei dieser Temperatur und bei einem pH-Wert zwischen 6 und 7 durch. Der Ansatz wird anschließend mit 24,9 Teilen 3-(β-Sulfatoethylsulfonyl)-anilin versetzt, und die zweite Kondensationsreaktion wird bei einem pH-Wert zwischen 3 und 5,5 und einer Temperatur zwischen 50 und 80 ° C während etwa 15 Stunden durchgeführt.

Danach wird die erfindungsgemäße Azoverbindung mittels Natriumchlorid ausgesalzen und als Alkalimetallsalz (Natriumsalz) isoliert. Sie besitzt, in Form der freien Säure geschrieben, die Formel

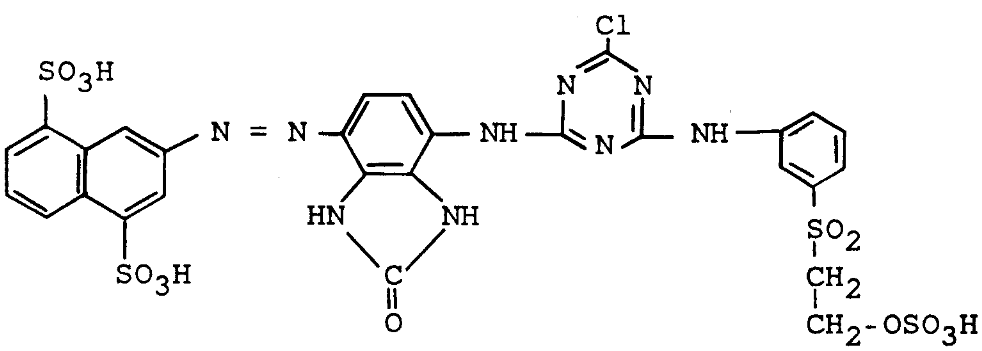

($\lambda_{max}$ = 379 nm)

und färbt beispielsweise Baumwolle in brillanten, goldgelben Tönen mit guten Echtheitseigenschaften.

Beispiele 6 bis 55

In den nachfolgenden Tabellenbeispielen sind weitere erfindungsgemäße Monoazoverbindungen entsprechend der allgemeinen Formel (1) mit Hilfe der Formelreste von Formel (1) beschrieben. Sie lassen sich in erfindungsgemäßer Weise, beispielsweise analog dem Beispiel 1, herstellen. Sie zeigen ebenfalls sehr gute Farbstoffeigenschaften und liefern auf den in der Beschreibung genannten Materialien, wie insbesondere Cellulosefasermaterialien, farbstarke Färbungen und Drucke mit guten Echtheiten mit dem in dem jeweiligen Tabellenbeispiel angegebenen Farbton (hier auf Baumwolle).

| Bsp. | Azoverbindung der Formel (1) Rest D | Rest X | Rest Y | Farbton |
|---|---|---|---|---|
| 6 | 4,8-Disulfo-naphth-2-yl | 6-(ß-Sulfatoethylsulfonyl)-naphth-2-ylamino | Chlor | goldgelb (376) |
| 7 | dito | 4-(ß-Sulfatoethylsulfonyl)-phenylamino | Fluor | goldgelb (375) |
| 8 | dito | 3-(ß-Sulfatoethylsulfonyl)-phenylamino | Fluor | goldgelb (381) |
| 9 | dito | 4-(ß-Sulfatoethylsulfonyl)-phenylamino | Cyanamido | goldgelb (378) |
| 10 | dito | γ-(ß'-Sulfatoethylsulfonyl)-propylamino | Cyanamido | goldgelb (377) |
| 11 | 3,6,8-Trisulfo-naphth-2-yl | 4-(ß-Sulfatoethylsulfonyl)-phenylamino | Chlor | goldgelb (395) |
| 12 | dito | 3-(ß-Sulfatoethylsulfonyl)-phenylamino | Chlor | goldgelb (394) |
| 13 | dito | γ-(ß'-Sulfatoethylsulfonyl)-propylamino | Chlor | goldgelb (389) |
| 14 | dito | 4-(ß-Sulfatoethylsulfonyl)-phenylamino | Fluor | goldgelb (393) |
| 15 | dito | 3-(ß-Sulfatoethylsulfonyl)-phenylamino | Fluor | goldgelb (394) |
| 16 | dito | 4-(ß-Sulfatoethylsulfonyl)-phenylamino | Cyanamido | goldgelb (392) |
| 17 | dito | 3-(ß-Sulfatoethylsulfonyl)-phenylamino | Cyanamido | goldgelb (390) |

| Bsp. | Azoverbindung der Formel (1)<br>Rest D | Rest X | Rest Y | Farbton |
|---|---|---|---|---|
| 18 | 3,6,8-Trisulfo-naphth-2-yl | γ-(β'-Sulfatoethylsulfonyl)-propylamino | Cyanamido | goldgelb (393) |
| 19 | dito | 6-(β-Sulfatoethylsulfonyl)-naphth-2-ylamino | Cyanamido | goldgelb (392) |
| 20 | dito | 6-(β-Sulfatoethylsulfonyl)-8-sulfo-naphth-2-ylamino | Cyanamido | goldgelb (395) |
| 21 | 2,4-Disulfo-phenyl | 4-(β-Sulfatoethylsulfonyl)-phenylamino | Chlor | goldgelb (381) |
| 22 | dito | 3-(β-Sulfatoethylsulfonyl)-phenylamino | Chlor | goldgelb (383) |
| 23 | dito | γ-(β'-Sulfatoethylsulfonyl)-propylamino | Chlor | goldgelb (376) |
| 24 | dito | 4-(β-Sulfatoethylsulfonyl)-phenylamino | Fluor | goldgelb (378) |
| 25 | dito | 3-(β-Sulfatoethylsulfonyl)-phenylamino | Fluor | goldgelb (377) |
| 26 | dito | 4-(β-Sulfatoethylsulfonyl)-phenylamino | Cyanamido | goldgelb (376) |
| 27 | dito | 3-(β-Sulfatoethylsulfonyl)-phenylamino | Cyanamido | goldgelb (379) |
| 28 | dito | γ-(β'-Sulfatoethylsulfonyl)-propylamino | Cyanamido | goldgelb (378) |
| 29 | 2,5-Disulfo-phenyl | 4-(β-Sulfatoethylsulfonyl)-phenylamino | Chlor | goldgelb (382) |
| 30 | dito | 3-(β-Sulfatoethylsulfonyl)-phenylamino | Chlor | goldgelb (378) |
| 31 | dito | 4-(β-Sulfatoethylsulfonyl)-phenylamino | Fluor | goldgelb (377) |

| Bsp. | Azoverbindung der Formel (1) Rest D | Rest X | Rest Y | Farbton |
|---|---|---|---|---|
| 32 | 2,5-Disulfo-phenyl | 3-(ß-Sulfatoethylsulfonyl)-phenylamino | Fluor | goldgelb (375) |
| 33 | dito | 4-(ß-Sulfatoethylsulfonyl)-phenylamino | Cyanamido | goldgelb (376) |
| 34 | dito | 3-(ß-Sulfatoethylsulfonyl)-phenylamino | Cyanamido | goldgelb (378) |
| 35 | dito | γ-(ß'-Sulfatoethylsulfonyl)-propylamino | Cyanamido | goldgelb (381) |
| 36 | dito | 6-(ß-Sulfatoethylsulfonyl)-naphth-2-ylamino | Cyanamido | goldgelb (380) |
| 37 | dito | 6-(ß-Sulfatoethylsulfonyl)-8-sulfo-naphth-2-ylamino | Cyanamido | goldgelb (381) |
| 38 | 4,8-Disulfo-naphth-2-yl | 4-(ß-Sulfatoethylsulfonyl)-phenylamino | Chlor | goldgelb (379) |
| 39 | dito | 3-(ß-Sulfatoethylsulfonyl)-phenylamino | Chlor | goldgelb (379) |
| 40 | dito | γ-(ß'-Sulfatoethylsulfonyl)-propylamino | Chlor | goldgelb (375) |
| 41 | dito | 6-(ß-Sulfatoethylsulfonyl)-8-sulfo-naphth-2-ylamino | Chlor | goldgelb (377) |
| 42 | 4-Chlor-3-methyl-6-sulfo-phenyl | 3-(ß-Sulfatoethylsulfonyl)-phenylamino | Chlor | goldgelb (380) |
| 43 | 3,6,8-Trisulfo-naphth-2-yl | 4-(ß-Sulfatoethylsulfonyl)-phenylamino | Methoxy | goldgelb (390) |
| 44 | dito | γ-(ß'-Sulfatoethylsulfonyl)-propylamino | Methoxy | goldgelb (392) |

| Bsp. | Azoverbindung der Formel (1) Rest D | Rest X | Rest Y | Farbton |
|---|---|---|---|---|
| 45 | 4,8-Disulfo-naphth-2-yl | 3-(ß-Sulfatoethylsulfonyl)-phenylamino | Methoxy | goldgelb (378) |
| 46 | dito | dito | ß-Sulfoethyl-amino | goldgelb (380) |
| 47 | dito | 4-(ß-Sulfatoethylsulfonyl)-phenylamino | dito | goldgelb (381) |
| 48 | 3,6,8-Trisulfo-naphth-2-yl | dito | Morpholino | goldgelb (393) |
| 49 | 4,8-Disulfo-naphth-2-yl | dito | Morpholino | goldgelb (380) |
| 50 | dito | 3-(ß-Sulfatoethylsulfonyl)-phenylamino | Morpholino | goldgelb (378) |
| 51 | dito | ß-[ß'-(Vinylsulfonyl)-ethoxy]-ethylamino | Chlor | goldgelb (382) |
| 52 | dito | dito | Fluor | goldgelb (379) |
| 53 | 2,2'-Disulfo-4'-nitro-stilben-4-yl | 4-(ß-Sulfatoethylsulfonyl)-phenylamino | Chlor | goldgelb (384) |
| 54 | dito | 3-(ß-Sulfatoethylsulfonyl)-phenylamino | Chlor | goldgelb (383) |
| 55 | 4-Chlor-3-methyl-6-sulfo-phenyl | 4-(ß-Sulfatoethylsulfonyl)-phenylamino | Chlor | goldgelb (382) |

**Patentansprüche**

1. Wasserlösliche Azoverbindung entsprechend der allgemeinen Formel (1)

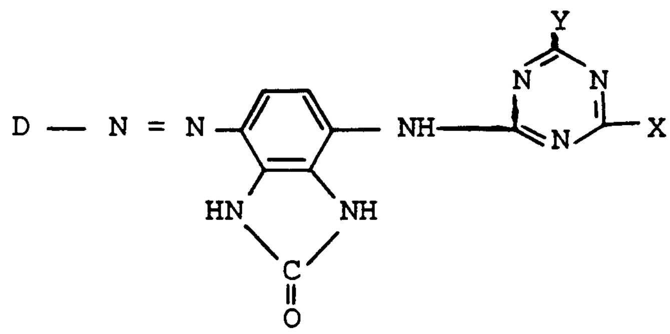

(1)

in welcher bedeuten:

D ist Phenyl oder Naphthyl, die beide substituiert sind, wobei mindestens einer der Substituenten eine wasserlöslich machende Gruppe ist oder ein Substituent ist, der eine wasserlöslich machende Gruppe enthält;

Y ist Fluor, Chlor oder eine Gruppe der allgemeinen Formel (2)

— A — R (2)

in welcher

A Sauerstoff oder die Gruppe NH ist, bevorzugt NH ist, und

R Wasserstoff, Alkyl von 1 bis 10 C-Atomen, bevorzugt von 1 bis 4 C-Atomen, oder Cycloalkyl mit 5 bis 8 C-Atomen ist oder Alkyl von 2 bis 8 C-Atomen ist, das durch eine oder zwei Heterogruppen unterbrochen ist, oder Benzyl, Sulfomethyl, $\beta$-Sulfoethyl oder Cyano ist, bevorzugt Cyano ist;

X ist Fluor, Chlor oder eine Aminogruppe der allgemeinen Formel -NH-B , in welcher

B eine Gruppe der allgemeinen Formel (3a), (3b) oder (3c)

— alk — $SO_2$ — Z (3a)

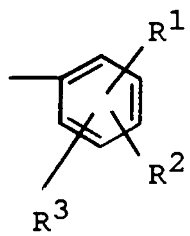

(3b)

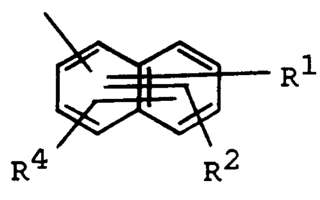

(3c)

ist, in welchen

alk verzweigtes oder vorzugsweise geradkettiges Alkylen von 1 bis 4 C-Atomen ist oder Alkylen von 2 bis 8 C-Atomen ist, das durch 1 oder 2 Heterogruppen unterbrochen ist,

Z Vinyl ist oder Ethyl ist, das in $\beta$-Stellung durch einen Substituenten substituiert ist, der durch Alkali unter Bildung der Vinylgruppe eliminierbar ist,

$R^1$ Wasserstoff, Carboxy, Sulfo oder eine Gruppe der allgemeinen Formel $-SO_2$-Z mit Z einer der obengenannten Bedeutungen ist,

$R^2$ Wasserstoff, Alkyl von 1 bis 4 C-Atomen, Alkoxy von 1 bis 4 C-Atomen, Chlor, Brom, Carboxy, Sulfo oder Nitro ist, bevorzugt Wasserstoff, Alkyl von 1 bis 4 C-Atomen, Alkoxy von 1 bis 4 C-Atomen oder Sulfo ist,

$R^3$ Wasserstoff, Alkyl von 1 bis 4 C-Atomen, Alkoxy von 1 bis 4 C-Atomen, Chlor oder Brom ist,

bevorzugt Wasserstoff oder Alkoxy von 1 bis 4 C-Atomen ist, und

$R^4$ Wasserstoff, Sulfo oder Carboxy ist.

**2.** Verbindung nach Anspruch 1, dadurch gekennzeichnet, daß
D 2,4-Disulfo-phenyl, 2,5-Disulfo-phenyl, 4,8-Disulfo-naphth-2-yl, 3,6,8-Trisulfo-naphth-2-yl, 2,2'-Disulfo-4'-nitro-stilben-4-yl oder 4-Chlor-3-methyl-6-sulfo-phenyl ist.

**3.** Verbindung nach Anspruch 1 oder 2, dadurch gekennzeichnet, daß alk in Formel (3a) n-Propylen ist.

**4.** Verbindung nach mindestens einem der Ansprüche 1 bis 3, dadurch gekennzeichnet, daß $R^2$ Wasserstoff oder Sulfo ist.

**5.** Verbindung nach mindestens einem der Ansprüche 1 bis 4, dadurch gekennzeichnet, daß $R^3$ Wasserstoff ist.

**6.** Verbindung nach mindestens einem der Ansprüche 1 bis 5, dadurch gekennzeichnet, daß Z β-Sulfatoethyl ist.

**7.** Verfahren zur Herstellung einer Verbindung der allgemeinen Formel (1) von Anspruch 1, dadurch gekennzeichnet, daß man ein Amin der allgemeinen Formel (4)

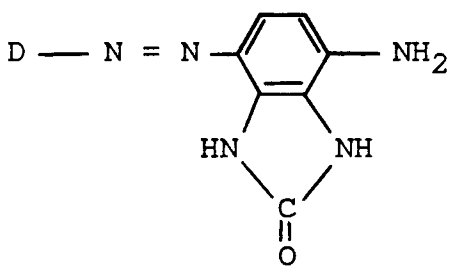

(4)

in welcher D die in Anspruch 1 genannte Bedeutung besitzt, mit einer Verbindung der allgemeinen Formel Hal-W , in welcher Hal Chlor oder Fluor ist und W ein Rest der allgemeinen Formel (5)

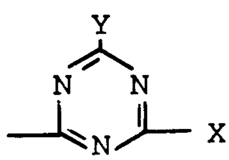

(5)

mit X und Y der in Anspruch 1 genannten Bedeutungen ist, umsetzt, wobei im Falle, daß in Formel Hal-W sowohl Hal, X und Y gleichzeitig Halogen sind, diese jeweils gleichzeitig Chlor oder gleichzeitig Fluor sind, oder daß man eine Verbindung der allgemeinen Formel (6)

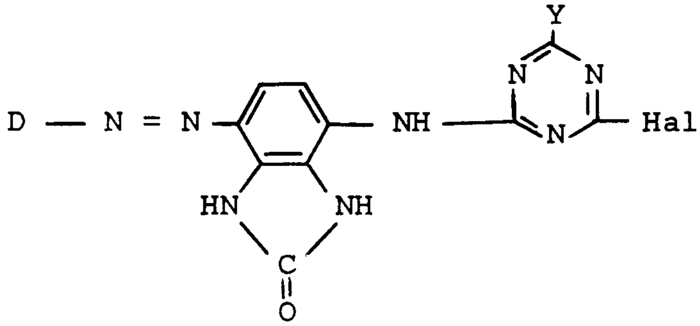

(6)

in welcher D, Y und Hal eine der in Anspruch 1 genannten Bedeutungen besitzen, wobei im Falle, daß

Y und Hal beide Halogen bedeuten, beide bevorzugt gleichzeitig Chlor oder Fluor sind, mit einer Verbindung der allgemeinen Formel $H_2N$-B mit B der in Anspruch 1 genannten Bedeutung umsetzt.

**8.** Verwendung eines Farbstoffes von mindestens einem der Ansprüche 1 bis 7 zum Färben und Bedrucken von hydroxy- und/oder carbonamidgruppenhaltigem Material, insbesondere Fasermaterial.

**9.** Verfahren zum Färben und Bedrucken von hydroxy- und/oder carbonamidgruppenhaltigem Material, vorzugsweise Fasermaterial, bei welchem man einen Farbstoff auf das Material aufbringt oder in das Material einbringt und den Farbstoff auf oder in dem Material mittels Wärme oder mit Hilfe eines alkalisch wirkenden Mittels oder mittels Wärme und mit Hilfe eines alkalischen Mittels fixiert, dadurch gekennzeichnet, daß man als Farbstoff einen Farbstoff von mindestens einem der Ansprüche 1 bis 7 verwendet.

Europäisches Patentamt

# EUROPÄISCHER RECHERCHENBERICHT

Nummer der Anmeldung

EP 91 12 1926

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| | Keine Entgegenhaltungen<br>----- | | C 09 B 62/085<br>C 09 B 62/51<br>D 06 P 1/38 |
| | | | **RECHERCHIERTE SACHGEBIETE (Int. Cl.5)** |
| | | | C 09 B |

Der vorliegende Recherchenbericht wurde für alle Patentansprüche erstellt

| Recherchenort | Abschlußdatum der Recherche | Prüfer |
|---|---|---|
| DEN HAAG | 20-02-1992 | GINESTET M.E.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)